# EUROPEAN PATENT SPECIFICATION

(11) **EP 4 365 640 B1**
(45) Date of publication and mention of the grant of the patent: **16.09.2026**
(21) Application number: 22832030.5
(22) Date of filing: 28.06.2022
(51) Int. Cl.: G01V 5/00, G01N 23/04, G01V 5/22

(54) **INSPECTION DEVICE AND ARTICLE TRANSFER INSPECTION SYSTEM**
INSPEKTIONSVORRICHTUNG UND ARTIKELTRANSFERINSPEKTIONSSYSTEM
DISPOSITIF ET SYSTÈME D'INSPECTION POUR TRANSFERT D'ARTICLES

(30) Priority: 02.07.2021 CN 202110752330
(43) Date of publication of application: 08.05.2024
(73) Proprietor: Nuctech Company Limited, TongFang Building Shuangqinglu Haidian District Beijing 100084 (CN)
(72) Inventor: SUN, Shangmin, Beijing 100084 (CN); ZONG, Chunguang, Beijing 100084 (CN); SHI, Junping, Beijing 100084 (CN); HE, Yuan, Beijing 100084 (CN); GUO, Yiwei, Beijing 100084 (CN); ZHANG, Qi, Beijing 100084 (CN); LI, Ying, Beijing 100084 (CN); SONG, Quanwei, Beijing 100084 (CN); MA, Yuan, Beijing 100084 (CN); YANG, Xuejing, Beijing 100084 (CN)
(74) Representative: Gunzelmann, Rainer
(86) International application number: PCT/CN2022/101844
(87) International publication number: WO 2023/274216

(56) References cited:
- CN-A- 1 627 061
- CN-A- 101 183 082
- CN-A- 106 290 420
- CN-A- 107 860 782
- CN-A- 107 861 165
- CN-A- 108 037 542
- CN-A- 110 716 240
- CN-A- 112 083 510
- CN-A- 113 341 475
- CN-U- 208 547 726
- CN-U- 215 180 942
- US-A1- 2012 076 257
- US-A1- 2012 257 717

## Description

### Cross-References to Related Applications

The present disclosure is based on China application with an application number of 202110752330.6 filed on July 2, 2021, and claims its priority.

### Field of the Invention

The present invention relates to the technical field of safety inspection, in particular to an inspection device and an article transfer inspection system.

### Background of the Invention

At present, the radiation inspection device is generally fixed on the ground, or carried on the vehicle chassis or walking wheels and can walk on the ground, so as to realize scanning through the relative movement between the inspection device and the article to be inspected. The article to be inspected can be placed on the inspection platform or carried by vehicles, so that the inspection can be realized through the relative movement between the inspection device and the article to be inspected.

However, in view of the new transfer logistics mode that the detected object is hoisted by the sling in the air and travels along the predetermined track, when it is necessary to inspect the detected object from the air, the current inspection device can't meet this inspection demand. Therefore, in view of this emerging logistics transfer system, it is urgent to propose an inspection device that can meet the demand.

CN208547726U discloses a radiation monitoring system relates to vehicle radiation detection area for an efficiency of current vehicle photic sense is provided. This radiation monitoring system includes: the check out test set is including ray apparatus and detector, the frame, the frame is all located to ray apparatus and detector, and platform for that parks two or above quantity waits to detect the thing. Wherein, the frame is configured as the portability to make and to wait to detect the thing and pass through the monitoring channel between ray apparatus and the detector.

### Summary of the Invention

The invention is defined by the appended claims. Embodiments of the present disclosure provide an inspection device and an article transfer inspection system, which can meet the safety inspection requirements of hoisted articles to be inspected.

According to a first aspect of the present disclosure, there is provided an inspection device including:
a radiation source; and
an arm frame, comprising a horizontal arm and a vertical arm, wherein the horizontal arm is arranged along a first direction, a first end of the horizontal arm is connected with a first end of the vertical arm, and a second end of the vertical arm extends upwards, and detectors are arranged on both the horizontal arm and the vertical arm;
wherein the radiation source is arranged close to the second end of the horizontal arm in the first direction, and an inspection channel with an upward opening is formed between the radiation source, the horizontal arm and the vertical arm, and is configured for an article to be inspected hoisted from above to pass through, so as to realize safety inspection in the process of hoisting the article to be inspected in the air; the inspection device is fixed and kept in a static state, and the article to be inspected moves in a second direction during the hoisting process, wherein the second direction is perpendicular to the first direction in the horizontal plane.

In some embodiments, the inspection device further includes a support part, the top of which is provided with a support surface with a preset height from the ground, and the radiation source and the arm frame is provided on the support part.

In some embodiment, the support part includes a base and a support platform, wherein the support platform is arranged at the top of the base, and a top surface of the support platform forms the support surface.

In some embodiments, an installation height of the radiation source is not lower than an upper surface of the article to be inspected, and horizontal rays emitted by the radiation source can be received by the detector on the vertical arm.

In some embodiments, the inspection device further includes a device compartment, and a first compartment and a second compartment are arranged in the device compartment, wherein the first compartment is located at the top of the second compartment, the first compartment is configured to accommodate the radiation source, and the second compartment is configured to accommodate corollary devices of the radiation source.

In some embodiments, the inspection device includes two arm frames, which are respectively arranged at two sides of the radiation source in the first direction.

In some embodiments, the inspection device includes two radiation sources, which are arranged at intervals along the second direction and are configured to emit rays to the arm frames on both sides respectively, and the two arm frames are staggered along a second direction; wherein the second direction is perpendicular to the first direction in the horizontal plane.

In some embodiments, the inspection device includes a single arm frame, and the arm frame is provided on one side of the radiation source along the first direction.

In some embodiments, the inspection device further includes a protective wall, and in the first direction, the protective wall is arranged at the outer side of at least one of the arm frame and the radiation source.

According to a second aspect of the present disclosure, there is provided an article transfer inspection system, including:
a transfer device configured to hoist the article to be inspected; and
the inspection device of the above embodiment configured to perform safety inspection on the article to be inspected passing through the inspection channel.

In some embodiments, the transfer device includes:
a track extending along a second direction and is located between the radiation source and the vertical arm in the first direction, wherein the second direction is perpendicular to the first direction;
a sling configured to hoist the article to be inspected; and
a driving part configured to drive the sling to move the article to be inspected along the track.

In some embodiments, an article transfer inspection system includes two transfer devices, and the inspection device includes two arms. In the first direction, the two transfer devices are located on both sides of the radiation source, and the two arms are respectively located on both sides of the radiation source.

In some embodiments, the article transfer inspection system includes a single transfer device, and the inspection device includes a single arm frame. In the first direction, the transfer device and the arm frame are located on the same side of the radiation source.

In some embodiments, the article transfer inspection system includes two transfer devices, and the inspection device includes a single arm frame. In the first direction, the two transfer devices are located on both sides of the radiation source respectively, and the arm frame can be optionally located on either side of the radiation source.

Based on the above technical solution, the horizontal arm is arranged at the bottom, and the vertical arm extends vertically upward from the second end of the horizontal arm, so that an inspection channel with an upward opening is formed, and device such as a sling for hoisting the articles to be inspected can pass through the inspection channel, so that it is suitable for realizing safety inspection in the process of hoisting the articles to be inspected in the air, can meet the requirements of this new logistics transportation mode, does not need to unload the articles to be inspected on the ground for inspection, and can improve the overall efficiency of article transportation and safety inspection.

### Brief Description of the Drawings

Drawings illustrated herein are used for providing further understanding of the present disclosure and form part of the present application, and illustrative embodiments of the present disclosure and description thereof are intended for explaining instead of improperly limiting the present disclosure. In the drawings:
FIG. 1 is a front view of some embodiments of the inspection device of the present disclosure.
FIG. 2 is a left view of some embodiments of the inspection device of the present disclosure.
FIG. 3 is a top view of some embodiments of the inspection device of the present disclosure.
FIG. 4 is an imaging schematic diagram of some embodiments of the inspection device of the present disclosure.
FIG. 5 is a schematic diagram of the internal structure of some embodiments of the inspection device of the present disclosure.
FIG. 6 is a perspective view of some embodiments of the inspection device of the present disclosure.
FIG. 7 is a front view of other embodiments of the inspection device of the present disclosure.
FIG. 8 is a top view of other embodiments of the inspection device of the present disclosure.
FIG. 9 is an imaging schematic diagram of other embodiments of the inspection device of the present disclosure.
FIG. 10 is a schematic diagram of the internal structure of other embodiments of the inspection device of the present disclosure.
FIG. 11 is a front view of still other embodiments of the inspection device of the present disclosure.

### Description by reference signs

1, Device compartment; 11, Radiation source; 1A, First compartment; 1B, Second compartment;
2, Arm frame; 21, Horizontal arm; 22, Vertical arm; 23, Detector;
3, Support part; 31, Base; 32, Support platform; 321, Support surface;
4, Protective wall; 41, Notch; 5, Container; 6, Transfer device; 61, Track; 62, Sling; 63, Driving part; 7, fixing bracket; 71, Support column; 72, Extension arm; 73, Connecting part;
G, Inspection channel; x, First direction; y, Second direction; z, Third direction.

### Description of the Embodiments

The present disclosure is described in detail below. In the following paragraphs, different aspects of embodiments are defined in more detail. The aspects so defined may be combined with any other aspect or aspects, unless stated expressly to the contrary. In particular, any feature considered to be preferred or advantageous may be combined with one or more other features considered to be preferred or advantageous.

The terms "first", "second" and the like appearing in the present disclosure are only for convenience of description to distinguish different components with the same name, and do not indicate a precedence or primary-secondary relationship.

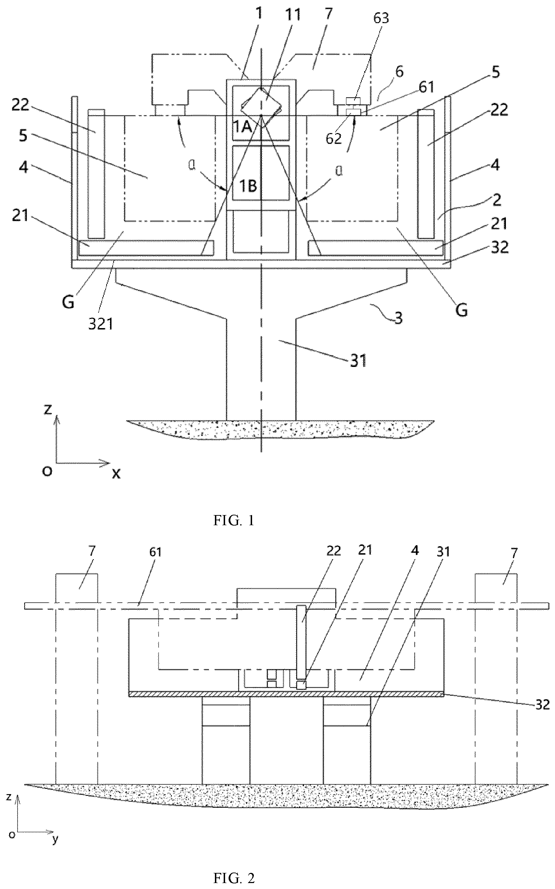

In the description of this disclosure, the orientation or positional relationship indicated by "upper", "lower", "top", "bottom", "front", "rear", "inner" and "outer" is based on the azimuth or positional relationship shown in the attached drawings, only for the convenience of describing this disclosure, and does not indicate or imply that the referred device must have a specific orientation, be constructed and constructed in a specific orientation. The origin of the coordinate system is o, the first direction x is in the horizontal plane, which is the left-right direction in FIG. 1, the second direction y is in the horizontal plane, which is the left-right direction in FIG. 2, and the second direction y is perpendicular to the first direction x, and the third direction z is vertical and perpendicular to the first direction z and the second direction y.

As shown in FIGS. 1 to 6, the present disclosure provides an inspection device, which in some embodiments includes a radiation source 11 and an arm frame 2. The radiation source 11 is configured to emit a radiation beam, for example, to generate X-rays, γ-a rays or neutron rays. The arm frame 2 includes a horizontal arm 21 and a vertical arm 22. The horizontal arm 21 is arranged along the first direction x, and the radiation source 11 is arranged near the second end of the horizontal arm 21 in the first direction x. The first end of the horizontal arm 21 is connected with the first end of the vertical arm 22, and the second end of the vertical arm 22 extends upward, that is, along the third direction z, forming an L-shaped arm frame, and both the horizontal arm 21 and the vertical arm 22 are provided with detectors 23. The detector 23 is configured to receive the rays emitted by the radiation source 11 through the article to be inspected to form a stereoscopic image of the surface of the article to be inspected. For example, the item to be inspected may be a container 5, a parcel or other container with goods inside.

An inspection channel G is formed between the radiation source 11, the horizontal arm 21 and the vertical arm 22, which is configured for the articles to be inspected hoisted from above to pass through, so as to realize scanning inspection through the relative movement between the articles to be inspected and the arm frame 2. The width and height of the inspection channel G can be adapted to the specifications of commonly used article to be inspected, for example, to the specifications of all containers 5.

In order to realize the relative movement between the article to be inspected and the arm frame 2, the following method is adopted the article to be inspected moves in the second direction y during the hoisting process, and the inspection device is fixed and kept in a static state. This way can avoid the shaking of the arm 2 of the radiation source 11 as much as possible, ensure the accuracy of inspection, and realize the inspection incidentally during the transfer of the article to be inspected, without affecting the transfer efficiency. Moreover, when the hoisting position is high, the inspection device is also fixed at a high altitude, thus improving the use safety.

In this embodiment, the horizontal arm 21 is arranged at the bottom, and the vertical arm 22 extends vertically upward from the second end of the horizontal arm 21, so that an inspection channel G with an upward opening is formed, and device such as a sling 62 for hoisting the articles to be inspected can pass above the inspection channel G, so that it is suitable for realizing safety inspection in the process of hoisting the articles to be inspected in the air, and can meet the requirements of this new logistics transfer mode, without unloading the articles to be inspected on the ground for inspection, and can improve the overall efficiency of article transfer and safety inspection.

In some embodiments, as shown in FIG. 1, the inspection device further includes a support part 3, the top of which is provided with a support surface 321, and the support surface 321 is at a preset height from the ground, and the preset height can be set according to the height of the article to be inspected. The radiation source 11 and the arm frame 2 are arranged on the support part 3.

In this embodiment, the support part 3 is arranged as the bearing body of the whole imaging system, so that the radiation source 11 and the arm frame 2 can be positioned at a certain height to adapt to the hoisting height of the article to be inspected, thus realizing the safety inspection of the article to be inspected hoisted in the air. Alternatively, when the hoisting height is low, the radiation source 11 and the arm frame 2 can also be arranged on the ground or on a platform on the ground.

As shown in FIG. 1, the support part 3 includes a base 31 and a support platform 32, which is arranged at the top of the base 31, and the top surface of the support platform 32 forms a support surface 321.

In this embodiment, the support platform 32 is supported by the base 31, so that the support platform 32 is at a certain height from the ground, and the radiation source 11 and the arm frame 2 are arranged on the support platform 32, so that the occupied area is small, which can not only realize the safety inspection of the articles to be inspected hoisted in the air, but also not affect the passage of pedestrians and vehicles, so that the normal road transportation is not affected.

Specifically, a plurality of bases 31 are arranged at intervals along the second direction y to provide more stable supporting force for the support platform 32. The base 31 may include an upright post and a support part, and the support part is fixed at the top of the upright post, and the size in the first direction x gradually increases from the bottom to the top.

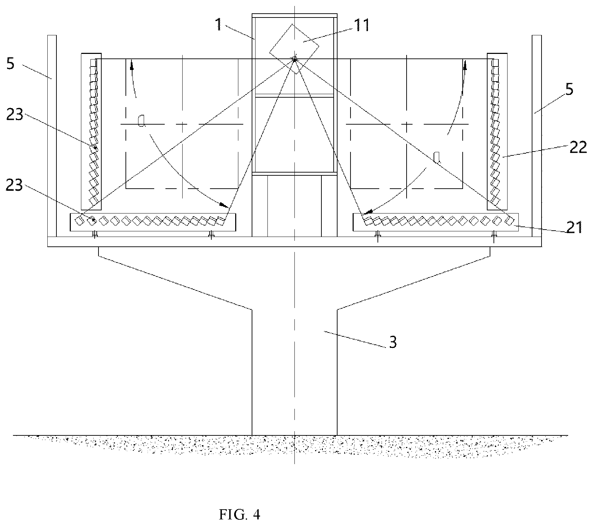

In some embodiments, as shown in FIG. 4, the installation height of the radiation source 11 is not lower than the upper surface of the article to be inspected, and the horizontal ray emitted by the radiation source 11 can be received by the detector 23 on the vertical arm 22.

Conventional scanning methods of inspection device mainly include horizontal scanning and vertical scanning. In horizontal scanning, the radiation source is arranged in the lateral position of the article to be inspected, for example, on the horizontal ground or in the device compartment on the ground; the radiation source is arranged above the article to be inspected in vertical scanning.

For the article transfer mode of this disclosure, if vertical scanning is adopted, it will be influenced by the transfer device 6 above the article to be inspected, and it is difficult to arrange the radiation source; if horizontal scanning is used, it is difficult to obtain the image of the article to be inspected comprehensively. Since the rays emitted by the radiation source 11 are fan-shaped and the central angle is a, the radiation source 11 is arranged above the side of the article to be inspected in this disclosure, so that the horizontal ray emitted by the radiation source 11 can not be lower than the upper surface of the article to be inspected, and the horizontal rays can also be received by the detector 23 on the vertical arm 22, thereby realizing the zero-degree scanning of the article to be inspected, improving the comprehensiveness and accuracy of the safety inspection, and facilitating the layout.

In some embodiments, the inspection device further includes a device compartment 1, and a first compartment 1A and a second compartment 1B are arranged in the device compartment 1, which can be divided into the first compartment 1A and the second compartment 1B by a horizontal partition, for example. The first compartment 1A is located at the top of the second compartment 1B. The first compartment 1A is configured to accommodate the radiation source 11, and the second compartment 1B is configured to accommodate the corollary device of the radiation source 11. The corollary device includes at least one of a modulator, a water cooling unit and an electrical cabinet.

In this embodiment, the device compartment 1 adopts an upper and lower double-layer structure. Setting the radiation source 11 on the top of the first compartment 1A is beneficial to make it above the side of the article to be inspected, so as to realize zero-degree scanning of the article to be inspected, and setting the corollary device of the radiation source 11 on the bottom of the second compartment 1B is beneficial to overhaul and maintenance. This structure can integrate the radiation source system in the device compartment 1 and reduce the floor space of the device compartment 1.

In some embodiments, as shown in FIGS. 1 to 6, the inspection device includes two arm frames 2, which are respectively arranged on both sides of the radiation source 11 in the first direction x. This embodiment has two independent inspection channels G, which can independently inspect the article to be inspected hoisted by the transfer device 6 located at both sides of the radiation source 11, thus improving the transfer and inspection efficiency.

In some embodiments, the inspection device includes two radiation sources 11, which are arranged at intervals along the second direction y and are configured to emit rays to the arm frames 2 on both sides respectively, and the two arm frames 2 are staggered along the second direction y; wherein the second direction y is perpendicular to the first direction x in the horizontal plane. For example, two radiation sources 11 can be located in the same device compartment 1, and the device compartment 1 can be located in the middle of two transfer devices 6.

In this embodiment, for the dual-channel inspection device, the two radiation sources 11 are arranged at intervals along the second direction y, and the two radiation sources 11 work independently, which not only can improve the inspection efficiency; Moreover, by arranging the two radiation sources 11 in the same device compartment 1, the occupied space of the device compartment 1 in the second direction y can be reduced, so that the layout of inspection device is more compact, and the occupied space of the device compartment 1 is minimized without affecting the operation of the article to be inspected, and the scanning inspection of the articles to be inspected hoisted by the multi-transfer device 6 can be realized.

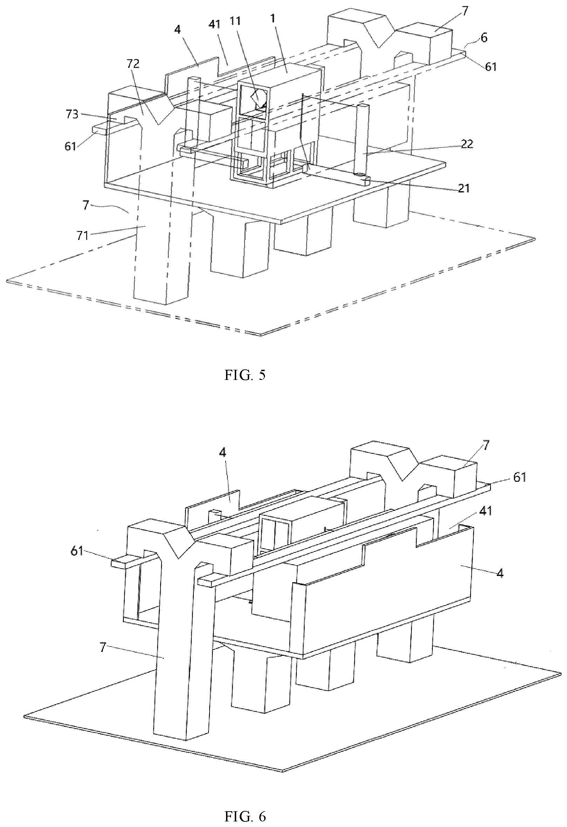

As shown in FIG. 6, the inspection device further includes a protective wall 4 configured to prevent radiation from the protective wall 4. In the first direction x, the protective wall 4 is arranged at least outside at least one of the arm frame 2 and the radiation source 11. Optionally, the protective wall 4 on one side extends along the second direction y, and in the second direction y, the protective wall 4 covers the arm frame 2 and the radiation source 11. For example, as shown in FIG. 1, there are two protective walls 4, which are installed on the support platform 32, and the two protective walls 4 are located at the outer sides of the arm frames 2 on both sides.

This embodiment can prevent the radiation emitted by the radiation source 11 from radiating outward from the protective wall 4, and improve the safety of personnel and other device.

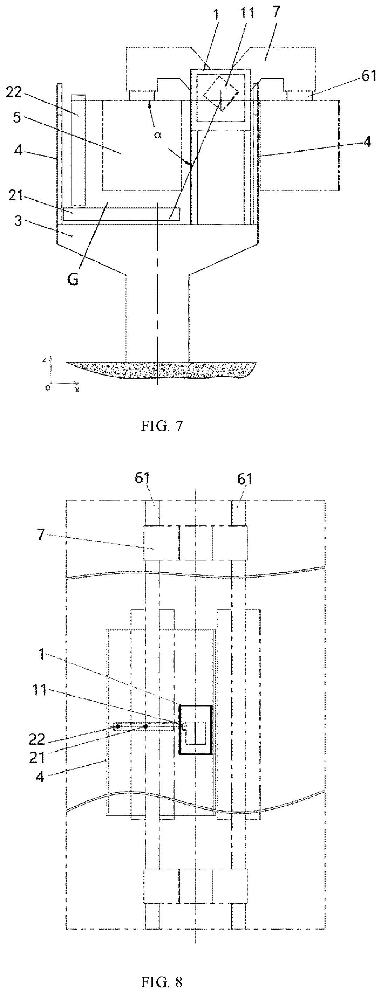

In the embodiments shown in figs. 7 to 10, and FIG. 11, the inspection device includes a single arm frame 2, and the arm frame 2 is arranged on one side of the radiation source 11 along the first direction x. Correspondingly, one radiation source 11 is provided.

This embodiment can realize single-channel inspection, and is suitable for the occasions where the article to be inspected are hoisted and passed along a single fixed path. The arm frame 2 can be fixedly arranged at one side of the radiation source 11, or the arm frame 2 can be detachably arranged to be selectively arranged at the side where the article to be inspected are hoisted according to the needs of scanning inspection.

In the article safety inspection system disclosed in this disclosure, during the scanning process, the radiation source 11 and the detectors 23 on the horizontal arm 21 and the vertical arm 22 remain relatively stationary, and the container 5 moves in the second direction y driven by the transfer device 6. When the container 5 passes through the inspection channel G, the radiation source 11 emits X-rays and penetrates the container 5, and the detectors 23 on the horizontal arm 21 and the vertical arm 22 receive the X-rays and convert them into output signals to generate digital image signals in real time, so as to realize the safety inspection of the container 5.

Secondly, the present disclosure provides an article transfer inspection system, which, in some embodiments, as shown in FIGS. 1 to 5, includes a transfer device 6 and the inspection device of the above embodiment. Wherein the transfer device 6 is configured to hoist the article to be inspected; the inspection device is configured to perform a safety inspection on the article to be inspected that pass through the inspection channel G.

In this embodiment, the inspection device forms an inspection channel G with an upward opening, and device such as the sling 62 for hoisting the article to be inspected can pass through the inspection channel G. Therefore, through the cooperation of this inspection device and the transfer device 6, the safety inspection can be realized in the process of hoisting the article to be inspected in the air, and the requirements of this new logistics transfer mode can be met, and it is not necessary to unload the article to be inspected on the ground for inspection, so that the overall efficiency of goods transfer and safety inspection can be improved.

In order to realize the relative movement between the article to be inspected and the arm frame 2, the transfer device is configured to make the article to be inspected move in the second direction y during the hoisting process, and the inspection device is fixed and kept in a static state. This way, the arm frame 2 of the radiation source 11 can be prevented from shaking as much as possible, the accuracy of inspection can be ensured, and the inspection can be carried out incidentally during the hoisting movement of the article to be inspected without affecting the transfer efficiency. Moreover, when the hoisting position is high, the inspection device is fixed to be provided in high altitude, thus improving the use safety.

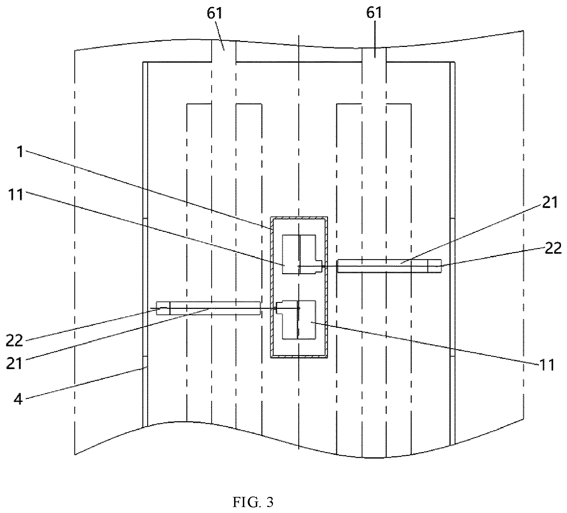

In some embodiments, as shown in FIG. 3, the transfer device 6 includes a track 61, a sling 62 and a driving part 63. The track 61 extends along the second direction y and is located between the radiation source 11 and the vertical arm 22 in the first direction x, and the second direction y is perpendicular to the first direction x; the hanger 62 is configured to hoist an article to be inspected, such as a hook; the driving part 63 is configured to drive the sling 62 to drive the article to be inspected to move along the track 61.

According to this embodiment, the article to be inspected can be moved along the track 61 by the driving part 63 during the hoisting process, and the safety inspection can be realized by the way during the hoisting and transfer process, so that the efficiency of the transfer and safety inspection of the article can be improved.

In some embodiments, as shown in FIG. 3, the article transfer inspection system includes two transfer devices 6, and the inspection device includes two arm frames 2. In the first direction x, the two transfer devices 6 are located on both sides of the radiation source 11, and the two arm frames 2 are located on both sides of the radiation source 11. This embodiment can independently carry out safety inspection in the process of transferring articles through two transfer devices 6, and the inspection efficiency can be improved through dual-channel inspection.

As shown in FIG. 5, the article transfer inspection system further includes a fixing bracket 7, which includes a support column 71, two extension arms 72 and two connecting parts 73. The bottom end of the support column 71 is fixed to the ground, and two extension arms 72 are connected to the top end of the support column 71 and extend to both sides along the first direction x. The extension arms 72 and the support column 71 can be connected through an inclined part. The two connecting parts 73 are respectively connected to the outer ends of the two extension arms 72 and extend downward, and the two connecting parts 73 are configured to be fixed to the two tracks 61 respectively. In order to reliably fix the track 61, there are two fixing brackets 7, which are located on both sides of the device compartment 1 along the second direction y. In order to avoid the extension arm 72, two sides of the top of the protective wall 4 can be provided with a notch 41 respectively.

In other embodiments, as shown in FIGS. 7 to 10, the article transfer inspection system is different from the embodiment of FIGS. 1 to 6 in that the inspection device includes two transfer devices 6, and the inspection device includes a single arm frame 2. In the first direction x, the two transfer devices 6 are located on both sides of the radiation source 11, and the arm frame 2 can be optionally arranged on either side of the radiation source 11.

In this embodiment, two transfer devices 6 are arranged, and the arm frame 2 is optionally arranged at one side of the radiation source 11, so that the structure of the goods transfer inspection system can be simplified, and the cost can be saved when the goods to be inspected are hoisted and passed along a single fixed path. Moreover, the arm frame 2 can be installed on the required side according to the requirements of hoisting inspection, which can flexibly adapt to the needs of transfer inspection.

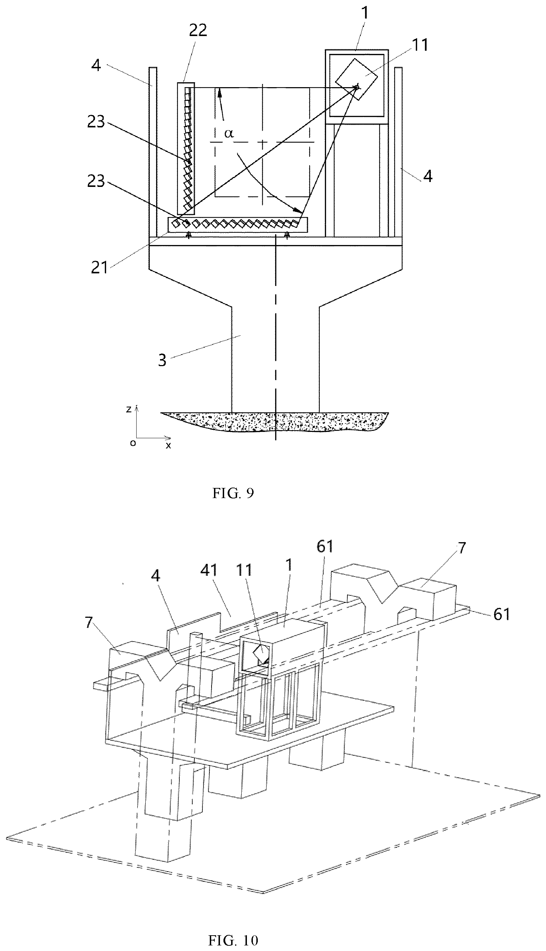

As shown in FIG. 9, two protective walls 4 are respectively arranged at the outer side of the arm frame 2 and the outer side of the device compartment 1, which can prevent the radiation emitted by the radiation source 11 from radiating outward from the protective walls 4 and improve the safety of personnel and other device.

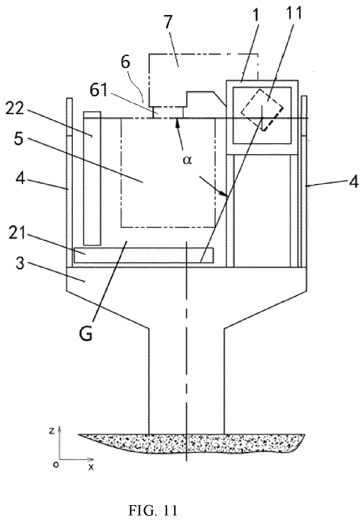

In still other embodiments, as shown in FIG. 11, the article transfer inspection system is different from the embodiments shown in FIGS. 7 to 10 in that it includes a single transfer device 6, and the inspection device includes a single arm frame 2. In the first direction x, the transfer device 6 and the arm frame 2 are arranged on the same side of the radiation source 11. This embodiment is suitable for the occasions where the article to be inspected are hoisted along a single fixed path, with simple structure and cost saving.

In this embodiment, two protective walls 4 are also respectively arranged on the outside of the arm frame 2 and the outside of the device compartment 1, which can prevent the rays emitted by the radiation source 11 from radiating outward from the protective walls 4 and improve the safety of personnel and other device.

The inspection device and the article transfer inspection system provided in the present disclosure are described above in detail. Specific embodiments are used herein to illustrate the principles and implementations of the present disclosure, and the description of the above embodiments are only used to help understand the method of the present disclosure and its core idea. It should be noted that to those of ordinary skill in the art, a number of improvements and modifications may also be made for the present disclosure without departing from claims.

## Claims

1. An inspection device, comprising:
a radiation source (11); and
an arm frame (2), comprising a horizontal arm (21) and a vertical arm (22), wherein the horizontal arm (21) is arranged along a first direction (x), a first end of the horizontal arm (21) is connected with a first end of the vertical arm (22), and a second end of the vertical arm (22) extends upwards, and detectors (23) are arranged on both the horizontal arm (21) and the vertical arm (22);
wherein the radiation source (11) is arranged close to the second end of the horizontal arm (21) in the first direction (x), and **characterized in that** an inspection channel (G) with an upward opening is formed between the radiation source (11), the horizontal arm (21) and the vertical arm (22), and is configured for an article to be inspected hoisted from above to pass through, so as to realize safety inspection in the process of hoisting the article to be inspected in the air; the inspection device is fixed and kept in a static state, and the article to be inspected moves in a second direction (y) during the hoisting process, wherein the second direction (y) is perpendicular to the first direction (x) in the horizontal plane.

2. The inspection device according to claim 1, further comprising a support part (3), the top of which is provided with a support surface (321) with a preset height from the ground, wherein the radiation source (11) and the arm frame (2) is provided on the support part (3).

3. The inspection device according to claim 2, wherein the support part (3) comprises a base (31) and a support platform (32); and the support platform (32) is arranged at the top of the base (31), and a top surface of the support platform (32) forms the support surface (321).

4. The inspection device according to any one of claims 1 to 3, wherein an installation height of the radiation source (11) is not lower than an upper surface of the article to be inspected, and horizontal rays emitted by the radiation source (11) can be received by the detector (23) on the vertical arm (22).

5. The inspection device according to any one of claims 1 to 4, further comprising a device compartment (1), in which a first compartment (1A) and a second compartment (1B) are arranged, wherein the first compartment (1A) is located at the top of the second compartment (1B); and the first compartment (1A) is configured to accommodate the radiation source (11), and the second compartment (1B) is configured to accommodate corollary devices of the radiation source (11).

6. The inspection device according to any one of claims 1 to 5, comprising two arm frames (2), which are respectively arranged at two sides of the radiation source (11) in the first direction (x).

7. The inspection device according to claim 6, comprising two radiation sources (11), which are arranged at intervals along the second direction (y) and are configured to emit rays to the arm frames (2) on both sides respectively, wherein the two arm frames (2) are staggered along a second direction (y).

8. The inspection device according to any one of claims 1 to 5, comprising a single arm frame (2), wherein the arm frame (2) is provided on one side of the radiation source (11) along the first direction (x).

9. The inspection device according to any one of claims 1 to 8, further comprising a protective wall (4), wherein in the first direction (x), the protective wall (4) is arranged at an outer side of at least one of the arm frame (2) and the radiation source (11).

10. An article transfer inspection system, comprising:
a transfer device (6) configured to hoist the article to be inspected; and
the inspection device according to any one of claims 1 to 9 configured to perform safety inspection on the article to be inspected passing through the inspection channel (G).

11. The article transfer inspection system according to claim 10, wherein the transfer device (6) comprises:
a track (61), extending along a second direction (y) and is located between the radiation source (11) and the vertical arm (22) in the first direction (x), wherein the second direction (y) is perpendicular to the first direction (x);
a sling (62), configured to hoist the article to be inspected; and
a driving part (63), configured to drive the sling (62) to move the article to be inspected along the track (61).

12. The article transfer inspection system according to claim 10 or 11, comprising two transfer devices (6), wherein the inspection device comprises two arm frames (2); and in the first direction (x), the two transfer devices (6) are located on both sides of the radiation source (11), and the two arm frames (2) are respectively located on both sides of the radiation source (11).

13. The article transfer inspection system according to claim 10 or 11, comprising a single transfer device (6), wherein the inspection device comprises a single arm frame (2); and in the first direction (x), the transfer device (6) and the arm frame (2) are located on the same side of the radiation source (11).

14. The article transfer inspection system according to claim 10 or 11, comprising two transfer devices (6), wherein the inspection device comprises a single arm frame (2); and in the first direction (x), the two transfer devices (6) are located on both sides of the radiation source (11) respectively, and the arm frame (2) is optionally located on either side of the radiation source (11).

## Patentansprüche

1. Eine Prüfvorrichtung, umfassend:
eine Strahlungsquelle (11); und
einen Armrahmen (2), umfassend einen Horizontalarm (21) und einen Vertikalarm (22), wobei der Horizontalarm (21) entlang einer ersten Richtung (x) angeordnet ist, ein erstes Ende des Horizontalarms (21) mit einem ersten Ende des Vertikalarms (22) verbunden ist und sich ein zweites Ende des Vertikalarms (22) nach oben erstreckt, und Detektoren (23) sowohl an dem Horizontalarm (21) als auch an dem Vertikalarm (22) angeordnet sind;
wobei die Strahlungsquelle (11) in der ersten Richtung (x) nahe dem zweiten Ende des Horizontalarms (21) angeordnet ist, und **dadurch gekennzeichnet, dass** ein Prüfkanal (G) mit einer nach oben gerichteten Öffnung zwischen der Strahlungsquelle (11), dem Horizontalarm (21) und dem Vertikalarm (22) ausgebildet ist und dafür eingerichtet ist, dass ein von oben angehobener zu prüfender Gegenstand hindurchtritt, um eine Sicherheitsprüfung während des Anhebens des zu prüfenden Gegenstands in der Luft zu realisieren; die Prüfvorrichtung befestigt ist und in einem statischen Zustand gehalten wird, und sich der zu prüfende Gegenstand während des Anhebevorgangs in einer zweiten Richtung (y) bewegt, wobei die zweite Richtung (y) in der horizontalen Ebene senkrecht zu der ersten Richtung (x) ist.

2. Die Prüfvorrichtung nach Anspruch 1, ferner umfassend ein Stützteil (3), dessen Oberseite mit einer Stützfläche (321) mit einer vorgegebenen Höhe über dem Boden versehen ist, wobei die Strahlungsquelle (11) und der Armrahmen (2) auf dem Stützteil (3) bereitgestellt sind.

3. Die Prüfvorrichtung nach Anspruch 2, wobei das Stützteil (3) eine Basis (31) und eine Stützplattform (32) umfasst; und die Stützplattform (32) an der Oberseite der Basis (31) angeordnet ist und eine Oberseite der Stützplattform (32) die Stützfläche (321) bildet.

4. Die Prüfvorrichtung nach einem der Ansprüche 1 bis 3, wobei eine Installationshöhe der Strahlungsquelle (11) nicht niedriger als eine Oberseite des zu prüfenden Gegenstands ist und von der Strahlungsquelle (11) ausgesendete horizontale Strahlen von dem Detektor (23) an dem Vertikalarm (22) empfangen werden können.

5. Die Prüfvorrichtung nach einem der Ansprüche 1 bis 4, ferner umfassend einen Vorrichtungsraum (1), in dem ein erstes Abteil (1A) und ein zweites Abteil (1B) angeordnet sind, wobei das erste Abteil (1A) an der Oberseite des zweiten Abteils (1B) angeordnet ist; und das erste Abteil (1A) dazu eingerichtet ist, die Strahlungsquelle (11) aufzunehmen, und das zweite Abteil (1B) dazu eingerichtet ist, zugehörige Vorrichtungen der Strahlungsquelle (11) aufzunehmen.

6. Die Prüfvorrichtung nach einem der Ansprüche 1 bis 5, umfassend zwei Armrahmen (2), die in der ersten Richtung (x) jeweils auf einer von zwei Seiten der Strahlungsquelle (11) angeordnet sind.

7. Die Prüfvorrichtung nach Anspruch 6, umfassend zwei Strahlungsquellen (11), die in Abständen entlang der zweiten Richtung (y) angeordnet sind und jeweils dazu eingerichtet sind, Strahlen zu den Armrahmen (2) auf beiden Seiten auszusenden, wobei die zwei Armrahmen (2) entlang einer zweiten Richtung (y) versetzt angeordnet sind.

8. Die Prüfvorrichtung nach einem der Ansprüche 1 bis 5, umfassend einen einzigen Armrahmen (2), wobei der Armrahmen (2) entlang der ersten Richtung (x) auf einer Seite der Strahlungsquelle (11) bereitgestellt ist.

9. Die Prüfvorrichtung nach einem der Ansprüche 1 bis 8, ferner umfassend eine Schutzwand (4), wobei die Schutzwand (4) in der ersten Richtung (x) auf einer Außenseite mindestens eines von dem Armrahmen (2) und der Strahlungsquelle (11) angeordnet ist.

10. Ein Gegenstandstransfer-Prüfsystem, umfassend:
eine Transfervorrichtung (6), die dazu eingerichtet ist, den zu prüfenden Gegenstand anzuheben; und
die Prüfvorrichtung nach einem der Ansprüche 1 bis 9, die dazu eingerichtet ist, eine Sicherheitsprüfung an dem zu prüfenden Gegenstand durchzuführen, der durch den Prüfkanal (G) hindurchtritt.

11. Das Gegenstandstransfer-Prüfsystem nach Anspruch 10, wobei die Transfervorrichtung (6) umfasst:
eine Schiene (61), die sich entlang einer zweiten Richtung (y) erstreckt und in der ersten Richtung (x) zwischen der Strahlungsquelle (11) und dem Vertikalarm (22) angeordnet ist, wobei die zweite Richtung (y) senkrecht zu der ersten Richtung (x) ist;
eine Hebeschlinge (62), die dazu eingerichtet ist, den zu prüfenden Gegenstand anzuheben; und
ein Antriebsteil (63), das dazu eingerichtet ist, die Hebeschlinge (62) anzutreiben, um den zu prüfenden Gegenstand entlang der Schiene (61) zu bewegen.

12. Das Gegenstandstransfer-Prüfsystem nach Anspruch 10 oder 11, umfassend zwei Transfervorrichtungen (6), wobei die Prüfvorrichtung zwei Armrahmen (2) umfasst; und in der ersten Richtung (x) die zwei Transfervorrichtungen (6) jeweils auf einer der beiden Seiten der Strahlungsquelle (11) angeordnet sind und die zwei Armrahmen (2) jeweils auf einer der beiden Seiten der Strahlungsquelle (11) angeordnet sind.

13. Das Gegenstandstransfer-Prüfsystem nach Anspruch 10 oder 11, umfassend eine einzige Transfervorrichtung (6), wobei die Prüfvorrichtung einen einzigen Armrahmen (2) umfasst; und in der ersten Richtung (x) die Transfervorrichtung (6) und der Armrahmen (2) auf derselben Seite der Strahlungsquelle (11) angeordnet sind.

14. Das Gegenstandstransfer-Prüfsystem nach Anspruch 10 oder 11, umfassend zwei Transfervorrichtungen (6), wobei die Prüfvorrichtung einen einzigen Armrahmen (2) umfasst; und in der ersten Richtung (x) die zwei Transfervorrichtungen (6) jeweils auf einer der beiden Seiten der Strahlungsquelle (11) angeordnet sind und der Armrahmen (2) wahlweise auf einer der beiden Seiten der Strahlungsquelle (11) angeordnet ist.

## Revendications

1. Un dispositif d'inspection, comprenant :
une source de rayonnement (11) ; et
un cadre de bras (2), comprenant un bras horizontal (21) et un bras vertical (22), dans lequel le bras horizontal (21) est disposé le long d'une première direction (x), une première extrémité du bras horizontal (21) est reliée à une première extrémité du bras vertical (22), et une seconde extrémité du bras vertical (22) s'étend vers le haut, et des détecteurs (23) sont disposés à la fois sur le bras horizontal (21) et sur le bras vertical (22) ;
dans lequel la source de rayonnement (11) est disposée à proximité de la seconde extrémité du bras horizontal (21) dans la première direction (x), et **caractérisé en ce qu'**un canal d'inspection (G) comportant une ouverture vers le haut est formé entre la source de rayonnement (11), le bras horizontal (21) et le bras vertical (22), et est configuré pour permettre à un article à inspecter, hissé depuis le haut, de le traverser, de manière à réaliser une inspection de sécurité au cours du processus de hissage de l'article à inspecter dans les airs ; le dispositif d'inspection est fixé et maintenu dans un état statique, et l'article à inspecter se déplace dans une seconde direction (y) pendant le processus de hissage, dans lequel la seconde direction (y) est perpendiculaire à la première direction (x) dans le plan horizontal.

2. Le dispositif d'inspection selon la revendication 1, comprenant en outre une partie de support (3), dont la partie supérieure est pourvue d'une surface de support (321) à une hauteur prédéfinie par rapport au sol, dans lequel la source de rayonnement (11) et le cadre de bras (2) sont disposés sur la partie de support (3).

3. Le dispositif d'inspection selon la revendication 2, dans lequel la partie de support (3) comprend une base (31) et une plateforme de support (32) ; et la plateforme de support (32) est disposée sur la partie supérieure de la base (31), et une surface supérieure de la plateforme de support (32) forme la surface de support (321).

4. Le dispositif d'inspection selon l'une quelconque des revendications 1 à 3, dans lequel une hauteur d'installation de la source de rayonnement (11) n'est pas inférieure à la hauteur d'une surface supérieure de l'article à inspecter, et des rayons horizontaux émis par la source de rayonnement (11) peuvent être reçus par le détecteur (23) situé sur le bras vertical (22).

5. Le dispositif d'inspection selon l'une quelconque des revendications 1 à 4, comprenant en outre un compartiment de dispositif (1), dans lequel un premier compartiment (1A) et un second compartiment (1B) sont disposés, dans lequel le premier compartiment (1A) est situé sur la partie supérieure du second compartiment (1B) ; et le premier compartiment (1A) est configuré pour recevoir la source de rayonnement (11), et le second compartiment (1B) est configuré pour recevoir des dispositifs auxiliaires de la source de rayonnement (11).

6. Le dispositif d'inspection selon l'une quelconque des revendications 1 à 5, comprenant deux cadres de bras (2), qui sont respectivement disposés des deux côtés de la source de rayonnement (11) dans la première direction (x).

7. Le dispositif d'inspection selon la revendication 6, comprenant deux sources de rayonnement (11), qui sont disposées à intervalles le long de la seconde direction (y) et sont configurées pour émettre des rayons respectivement vers les cadres de bras (2) situés des deux côtés, dans lequel les deux cadres de bras (2) sont décalés le long d'une seconde direction (y).

8. Le dispositif d'inspection selon l'une quelconque des revendications 1 à 5, comprenant un seul cadre de bras (2), dans lequel le cadre de bras (2) est disposé d'un côté de la source de rayonnement (11) le long de la première direction (x).

9. Le dispositif d'inspection selon l'une quelconque des revendications 1 à 8, comprenant en outre une paroi de protection (4), dans lequel, dans la première direction (x), la paroi de protection (4) est disposée sur un côté extérieur d'au moins l'un parmi le cadre de bras (2) et la source de rayonnement (11).

10. Un système d'inspection de transfert d'article, comprenant :
un dispositif de transfert (6) configuré pour hisser l'article à inspecter ; et
le dispositif d'inspection selon l'une quelconque des revendications 1 à 9 configuré pour effectuer une inspection de sécurité de l'article à inspecter qui passe à travers le canal d'inspection (G).

11. Le système d'inspection de transfert d'article selon la revendication 10, dans lequel le dispositif de transfert (6) comprend :
un rail (61), s'étendant le long d'une seconde direction (y) et étant situé entre la source de rayonnement (11) et le bras vertical (22) dans la première direction (x), dans lequel la seconde direction (y) est perpendiculaire à la première direction (x) ;
une élingue (62), configurée pour hisser l'article à inspecter ; et
une partie d'entraînement (63), configurée pour entraîner l'élingue (62) afin de déplacer l'article à inspecter le long du rail (61).

12. Le système d'inspection de transfert d'article selon la revendication 10 ou 11, comprenant deux dispositifs de transfert (6), dans lequel le dispositif d'inspection comprend deux cadres de bras (2) ; et, dans la première direction (x), les deux dispositifs de transfert (6) sont situés des deux côtés de la source de rayonnement (11), et les deux cadres de bras (2) sont respectivement situés des deux côtés de la source de rayonnement (11).

13. Le système d'inspection de transfert d'article selon la revendication 10 ou 11, comprenant un seul dispositif de transfert (6), dans lequel le dispositif d'inspection comprend un seul cadre de bras (2) ; et, dans la première direction (x), le dispositif de transfert (6) et le cadre de bras (2) sont situés du même côté de la source de rayonnement (11).

14. Le système d'inspection de transfert d'article selon la revendication 10 ou 11, comprenant deux dispositifs de transfert (6), dans lequel le dispositif d'inspection comprend un seul cadre de bras (2) ; et, dans la première direction (x), les deux dispositifs de transfert (6) sont respectivement situés des deux côtés de la source de rayonnement (11), et le cadre de bras (2) est facultativement situé de l'un ou l'autre côté de la source de rayonnement (11).
